(19) Europäisches Patentamt / European Patent Office / Office européen des brevets

(11) **EP 2 796 572 B1**

(12) **EUROPEAN PATENT SPECIFICATION**

(45) Date of publication and mention of the grant of the patent:
**30.05.2018 Bulletin 2018/22**

(21) Application number: **12858844.9**

(22) Date of filing: **16.11.2012**

(51) Int Cl.:
*C22C 38/48* *(2006.01)*    *C22C 38/00* *(2006.01)*
*C22C 38/58* *(2006.01)*    *C22C 38/02* *(2006.01)*
*C22C 38/04* *(2006.01)*    *C22C 38/42* *(2006.01)*
*C22C 38/44* *(2006.01)*    *C22C 38/50* *(2006.01)*
*C22C 38/54* *(2006.01)*    *B60R 21/16* *(2006.01)*
*C21D 9/00* *(2006.01)*    *C21D 1/42* *(2006.01)*
*C21D 9/08* *(2006.01)*

(86) International application number:
**PCT/JP2012/007351**

(87) International publication number:
**WO 2013/094116 (27.06.2013 Gazette 2013/26)**

(54) **METHOD FOR MANUFACTURING STEEL TUBE FOR AIRBAG**

VERFAHREN ZUM HERSTELLEN EINES STAHLROHRES FÜR AIRBAGS

PROCÉDÉ DE FABRICATION D'UN TUBE EN ACIER POUR UN COUSSIN DE SÉCURITÉ GONFLABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2011 JP 2011279791**

(43) Date of publication of application:
**29.10.2014 Bulletin 2014/44**

(73) Proprietor: **Nippon Steel & Sumitomo Metal Corporation**
**Tokyo 100-8071 (JP)**

(72) Inventors:
• **UCHIDA, Kazuhiro**
**Tokyo 100-8071 (JP)**
• **MIKI, Takeshi**
**Tokyo 100-8071 (JP)**

(74) Representative: **Zimmermann & Partner Patentanwälte mbB**
**Postfach 330 920**
**80069 München (DE)**

(56) References cited:
WO-A1-2011/152447    WO-A1-2011/152447
WO-A1-2011/161927    WO-A1-2011/161927
JP-A- H01 254 359    JP-A- 2002 294 339
JP-A- 2010 132 999    JP-A- 2010 132 999

**Description**

TECHNICAL FIELD

The present invention relates to a method for producing a steel tube for air bag by quenching using high-frequency induction heating. More particularly, the present invention relates to a method for producing a steel tube for air bag, by which a steel tube having high strength and toughness can be produced.

BACKGROUND ART

In an automotive air bag system, an accumulator manufactured by using a steel tube has been used frequently. In the accumulator using a steel tube, a high-pressure gas is filled, and at the time of air bag actuation, the high-pressure gas filled in the accumulator is injected into the air bag at once. Therefore, the steel tube used for the accumulator gets stresses at a high strain rate in a very short time, and therefore is required to have high strength and toughness and excellent burst resistance in addition to high dimensional accuracy, workability, and weldability.

Such a steel tube used for air bag is sometimes produced, for example, by the procedure described below.

(1) A steel material is hot-rolled into a steel tube.
(2) The steel tube is subjected to quenching and tempering treatment, the quenching being such that the steel tube is heated and then rapidly cooled.
(3) After being subjected to the quenching and tempering treatment, the steel tube is subjected to cold working to a predetermined size.
(4) The steel tube having been cold-worked is annealed to remove residual stresses.

The quenching and tempering treatment is performed on the steel tube to attain the strength and toughness required for the steel tube for air bag. In the case where the quenching and tempering treatment is performed on the steel tube after hot rolling and before cold working, the toughness of steel tube may happen to decrease by cold working.

Also, a method for producing a steel tube for air bag, in which the quenching and tempering treatment is performed after cold working, has been studied. In this method, a steel tube can be produced, for example, by the procedure described below.

(1) A steel material is hot-rolled into a steel tube.
(2) The steel tube is subjected to cold working to a predetermined size.
(3) The cold-worked steel tube is subjected to quenching and tempering treatment.

In the case where the quenching and tempering treatment is performed after cold working, the strength and toughness of steel tube can be attained by the quenching and tempering treatment.

Concerning a method for producing a steel tube for air bag, various proposals have conventionally been made, and, for example, Patent Literature 1 has been proposed. In the method for producing a steel tube for air bag described in Patent Literature 1, a steel material having a predetermined chemical composition is hot-rolled into a steel tube, the steel tube is subjected to quenching treatment, in which the steel tube is heated and then rapidly cooled, and tempering treatment performed at a temperature not more than $Ac_1$ transformation point, and thereafter the steel tube is subjected to cold working to a predetermined size. It is described in Patent Literature 1 that, by decreasing the working rate (reduction of area) at the time of cold working, the ratio of the X-ray integrated intensity ratio of {110} plane measured in a cross section perpendicular to an axial direction L of steel tube to the X-ray integrated intensity ratio of {110} plane measured in a longitudinal section perpendicular to a circumferential direction T of steel tube is made 50 or less, and excellent burst resistance can be attained.

Also, it is described in Patent Literature 1 that concerning the quenching treatment performed on the steel tube, it is preferable that the steel tube be rapidly heated to the quenching temperature, and thereafter be held for a short period of time and then rapidly cooled, and it is preferable that the quenching temperature be 900 to 1000°C, and the heating means be high-frequency induction heating.

In the method for producing a steel tube for air bag described in Patent Literature 2, a steel material having a predetermined chemical composition is hot-rolled into a steel tube, and after the steel tube has been subjected to cold working to a predetermined size, the steel tube is subjected to quenching treatment at a temperature of 900 to 960°C and tempering treatment, whereby the austenite grain size No. is made 11.0 or more. In Patent Literature 2, it is described that, by ensuring the austenite grain size No. 11.0 or more, the strength and toughness required for the steel tube for air bag can be attained. Also, it is described that, high-frequency induction heating is performed at the quenching time, and by making the holding time at a temperature of 900 to 1000°C 10 seconds or less, the crystal grains of the obtained steel tube preferably becomes further finer.

In the method for producing a steel tube for air bag described in Patent Literature 3, a steel material having a predetermined chemical composition is hot-rolled into a steel tube, the steel tube is subjected to cold working to a predetermined size, and thereafter the steel tube is subjected to quenching treatment, in which the steel tube is heated to a temperature not less than the $Ac_3$ transformation point, and tempering treatment at a temperature not more than the $Ac_1$ transformation point. In Patent Literature 3, it is described that, by causing the contents of Mn and Ti added as alloying elements to satisfy a specific relationship, a tensile strength not less than 1000 MPa and excellent toughness can be attained. Also, it is described that, in the quenching treatment performed on the steel tube, it is preferable that the steel tube be rapidly heated to the quenching temperature, and thereafter the steel tube be held for a short period of time and be cooled rapidly, and it is preferable that the quenching temperature be 900 to 1000°C and the heating means be high-frequency induction heating.

In the methods for producing a steel tube for air bag described in Patent Literatures 1 to 3, it is described that, as a means for heating the steel tube in quenching, high-frequency induction heating is performed, and in some of the Patent Literatures, the holding time at a specific temperature for the steel tube subjected to high-frequency induction heating is described. However, because of the inherent nature/principle of high-frequency induction heating, it is difficult to keep the temperature of heated steel tube constant. It is also difficult to accurately measure the temperature of steel tube being heated.

Patent Literature 4 discloses a method for producing a seamless steel pipe for an air bag system, including a quenching and tempering process subsequently to a cold working process.

CITATION LIST

PATENT LITERATURE

Patent Literature 1: International Application Publication No. WO2006/046503
Patent Literature 2: Japanese Patent Application Publication No. 2002-194501
Patent Literature 3: International Application Publication No. WO2004/104255
Patent Literature 4: Japanese Application Publication No. JP 2010-132999

SUMMARY OF INVENTION

TECHNICAL PROBLEM

As described above, in the conventional method for producing a steel tube for air bag, in which quenching is performed by high-frequency induction heating, the method for controlling the heating temperature and holding time of steel tube, that is, how the heating temperature and holding time of steel tube should be controlled in actual operation, has not been studied sufficiently.

The present invention has been made in view of the above situation, and accordingly an objective thereof is to provide a method for producing a steel tube for air bag, by which a steel tube having high strength and toughness can be produced by forming fully martensitic micro-structure in a steel tube and by ensuring fine crystal grains, owing to quenching and tempering treatment.

SOLUTION TO PROBLEM

The present inventor repeated studies rigorously, and obtained the following findings as the result of tests described in the after-mentioned Examples.

(1) The outer surface temperature of steel tube measured at the end of high-frequency induction heating is controlled within a predetermined range. Also, by using the measured outer surface temperature of steel tube, calculated is the time elapsed from when the outer surface temperature of steel tube reaches the temperature of $Ac_3$ transformation point to when the outer surface temperature of steel tube is measured, in the process of high-frequency induction heating. Further, based on the time, the timing when rapid cooling is started is controlled.

(2) By the above item (1), a fully martensitic micro-structure is formed in a steel tube subjected to the quenching and tempering treatment, and fine crystal grains are ensured, whereby a steel tube having high strength and toughness is obtained.

The present invention was completed based on the above findings, and the summaries thereof consist in methods for producing a steel tube for air bag described in (1) and (2) as below.

(1) A method for producing a steel tube for air bag, characterized in subjecting a steel tube having a wall thickness of 4.0 mm or less to quenching treatment in which the steel tube is rapidly cooled after high-frequency induction heating, the method comprising: subjecting the steel tube to high-frequency induction heating in such a manner that the outer surface temperature T1 (°C) of steel tube measured at the end of high-frequency induction heating is within the range defined by Formula (1); by using the outer surface temperature of steel tube thus measured, calculating time x (second) elapsed from when the outer surface temperature of steel tube reaches the temperature of $Ac_3$ transformation point in the process of high-frequency induction heating to when the outer surface temperature of steel tube is measured; and based on the calculated time x (second), controlling a period of time t (second) required from the measurement of the outer surface temperature of steel tube to the start of rapid cooling so that the time t (second) is within the range defined by Formula (2); wherein the time x (second) is calculated by Formula (3):

$$TAc3 + 40°C \leq T1 \leq 1100°C \qquad ... (1)$$

$$0(sec) < t \leq 10(sec) - x \qquad ... (2)$$

$$x = (T1 - TAc3) / v \qquad ... (3)$$

where TAc3 is the temperature (°C) of $Ac_3$ transformation point and v is a heating rate (°C/s) derived by dividing the difference between the outer surface temperatures (°C) of the steel tube measured at the end of the heating and at the beginning thereof by the heating time (s), and wherein the steel tube has a chemical composition consisting, by mass%, of C: 0.05 to 0.25%, Mn: 0.05 to 2.50%, Si: 0.1 to 1.0%, Cu: 0.01 to 0.80%, Ni: 0.01 to 0.80%, Cr: 0.01 to 1.20%, Mo: 0.01 to 1.00%, B: 0.05% or less, Ti: 0.10% or less, and Nb: 0.10% or less, the balance being Fe and impurities.

(2) The method for producing a steel tube for air bag described in the above item (1), characterized in that a blank tube obtained by hot rolling is subjected to cold working into a steel tube having a predetermined size, the steel tube is subjected to the quenching treatment, and thereafter the steel tube is tempered at a temperature not more than the $Ac_1$ transformation point.

ADVANTAGEOUS EFFECTS OF INVENTION

The methods for producing a steel tube of the present invention achieve remarkable effects described below.

(1) By using the outer surface temperature of steel tube measured at the end of the high-frequency induction heating, the temperature of steel tube at the time of quenching and a time period for which the steel tube stays at a temperature not less than the $Ac_3$ transformation point are controlled so as to be within a predetermined range.

(2) By the above item (1), a fully martensitic micro-structure is formed in the obtained steel tube, and fine crystal grains are ensured, whereby a steel tube having high strength and toughness can be obtained.

BRIEF DESCRIPTION OF DRAWINGS

[FIG. 1] FIG. 1 is a diagram schematically showing the relationship between time and outer surface temperature of steel tube at the time when the steel tube is quenched by high-frequency induction heating.

[FIG. 2] FIG. 2 is a schematic view showing an embodiment in which when a steel tube is quenched by the method for producing the steel tube of the present invention, adopted is a system using a coil shorter in length than the steel tube to be heated and a cooling device provided with a plurality of cooling water injection nozzles.

[FIG. 3] FIG. 3 is a diagram showing the results of tests using test specimens made of carbon steel.

[FIG. 4] FIG. 4 is a diagram showing the results of tests using test specimens made of low-alloy steel.

DESCRIPTION OF EMBODIMENTS

The method for producing a steel tube of the present invention will now be described with reference to the accompanying drawings.

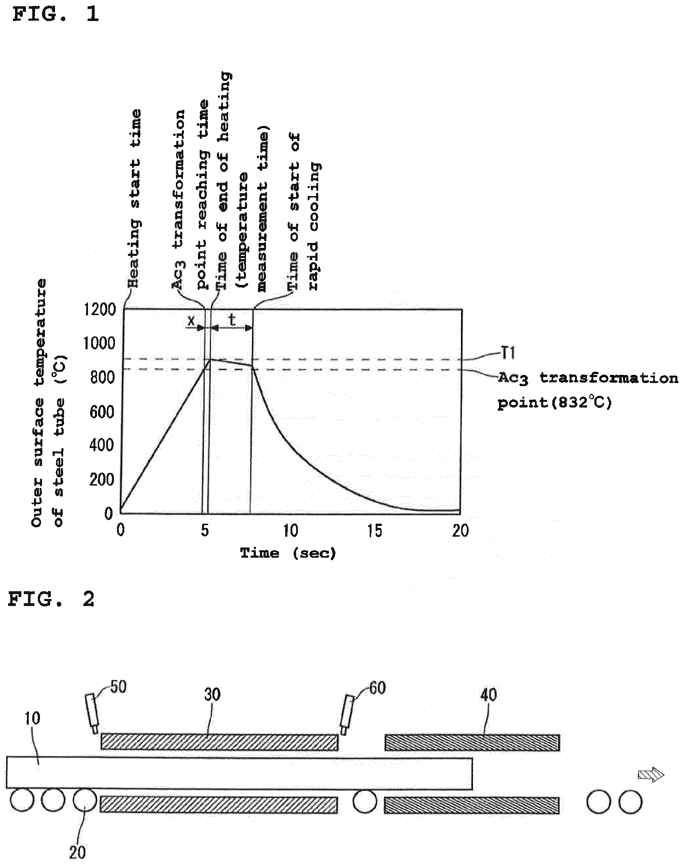

FIG. 1 is a diagram schematically showing the relationship between time and outer surface temperature of steel tube at the time when the steel tube is quenched by high-frequency induction heating. The relationship between the time at which the steel tube is quenched and the outer surface temperature of steel tube, shown in FIG. 1, is one in the case where the steel tube is subjected to high-frequency induction heating by using a high-frequency induction heating device, being conveyed to a cooling device, and thereafter is rapidly cooled by using the cooling device.

As shown in FIG. 1, when the high-frequency induction heating is started, the outer surface temperature of steel tube rises with time. When the high-frequency induction heating ends, the outer surface temperature of steel tube reaches a peak. Subsequently, for a while before the start of rapid cooling, the outer surface temperature of steel tube decreases by natural convection in air, and when the rapid cooling is started by the cooling device, the outer surface temperature of the steel tube lowers suddenly.

As described before, the method for producing a steel tube for air bag of the present invention is characterized in that: in subjecting a steel tube having a wall thickness of 4.0 mm or less to quenching treatment in which the steel tube is rapidly cooled after high-frequency induction heating, the steel tube is subjected to high-frequency induction heating in such a manner that the outer surface temperature T1 (°C) of steel tube measured at the end of high-frequency induction heating is within the range defined by Formula (1); by using the measured outer surface temperature of steel tube at the end of the heating, time x (second) elapsed from when the outer surface temperature of steel tube reaches the temperature of $Ac_3$ transformation point in the process of high-frequency induction heating is calculated; and based on the calculated time x (second), time t (second) required from the measurement of the outer surface temperature of steel tube to the start of rapid cooling is controlled so that the time t (second) is within the range defined by Formula (2).

If the wall thickness of steel tube as a workpiece is more than 4.0 mm, since the high-frequency induction heating is performed as a heating means, the difference in temperature between the outer surface and the inner surface of heated steel tube increases. As a result, even if the outer surface temperature T1 (°C) of steel tube measured at the end of high-frequency induction heating is made within the range defined by Formula (1), there is a risk that the temperature in the vicinity of the inner surface of heated steel tube does not reach the $Ac_3$ transformation point. As a result, the micro-structure of steel tube does not completely become austenite, the micro-structure of the steel tube that is obtained by subsequent rapid cooling does not become fully martensitic, and the strength and toughness may be insufficient. Therefore, in the method for producing a steel tube of the present invention, a steel tube having a wall thickness of 4.0 mm or less is a target. On the other hand, the lower limit of wall thickness is not subject to special restriction. However, if the wall thickness is less than 1.0 mm, it is difficult to process the steel tube to that thickness by cold working, so that the wall thickness is preferably 1.0 mm or more.

In the method for producing a steel tube of the present invention, the steel tube is subjected to high-frequency induction heating in such a manner that with the outer surface temperature T1 (°C) of steel tube measured at the end of high-frequency induction heating is within the range defined by Formula (1). If the outer surface temperature T1 of steel tube measured at the end of the heating deviates from the range defined by Formula (1) and becomes less than the temperature of $Ac_3$ transformation point plus 40°C, there is a risk that the temperature in the vicinity of the inner surface of heated steel tube does not become the $Ac_3$ transformation point or more. Therefore, a complete martensitic micro-structure tube is not formed in the obtained steel tube, so that the strength and toughness may become insufficient.

In order to form complete austenitic micro-structure in the steel tube, it is necessary that the whole of steel tube be heated to the $Ac_3$ transformation point. By rapidly cooling the steel tube after the micro-structure of steel tube has become completely austenitic, the micro-structure of steel tube can become fully martensitic. As described above, there is the difference in temperature between the outer surface and the inner surface of the steel tube when subjected to high-frequency induction heating; however, for the steel tube for air bag having a thickness of 4.0 mm or less, which is the object of the present application, the temperature difference is about 15°C at most. Therefore, if the steel tube is heated so that the outer surface temperature of steel tube becomes not less than the temperature of $Ac_3$ transformation point plus 40°C as defined in Formula (1), even considering measurement error and the like, the inner surface of steel tube having the lowest temperature is also reliably heated to a temperature more than the $Ac_3$ transformation point.

On the other hand, if the outer surface temperature of steel tube measured at the end of the heating deviates from the range defined by Formula (1) and becomes more than 1100°C, in the micro-structure of steel tube, the crystal grains coarsen, and the grain sizes of crystal grains of the obtained steel tube become large. Therefore, the toughness becomes insufficient.

Because of the inherent nature of high-frequency induction heating, it is difficult to hold the steel tube, which is a material to be heated, at a constant temperature, and during the induction heating, the temperature of steel tube keeps rising. It is also difficult to measure the temperature during induction heating. Further, it is difficult to measure the temperature of the inner surface of steel tube. In the present invention, therefore, the outer surface temperature of steel tube immediately after the end of induction heating is measured. This temperature substantially corresponds to the highest heating temperature of steel tube. Specifically, the outer surface temperature of steel tube can be measured by installing a radiation thermometer just next to the exit of an induction heating device.

Also, in the method for producing a steel tube of the present invention, by using the measured outer surface temperature of steel tube, time x (unit: second, refer to FIG. 1) elapsed from when the outer surface temperature of steel tube reaches the temperature of $Ac_3$ transformation point in the process of high-frequency induction heating is calculated. Then, time t (unit: second, refer to FIG. 1) required from the measurement of the outer surface temperature of steel tube to the start of rapid cooling is controlled so that the time t is within the range defined by Formula (2). Thus, when the steel tube is quenched, the time period for which the steel tube stays at a temperature not less than the $Ac_3$ transformation point is controlled.

If the time t required from the measurement of the outer surface temperature of steel tube to the start of rapid cooling exceeds the range defined by Formula (2), the crystal grain size of the obtained steel tube becomes large, so that the toughness may become insufficient. In order to make the crystal grain size of the obtained steel tube finer and to obtain a steel tube having higher toughness, it is preferable that the time period for which the steel tube stays at a temperature not less than the $Ac_3$ transformation point be shorter, and it is preferable that the time t required from the measurement of the outer surface temperature of steel tube to the start of rapid cooling be also shorter.

On the other hand, attention is paid to the case where the time t required from the measurement of the outer surface temperature of steel tube to the start of rapid cooling is zero, that is, rapid cooling is started immediately after the outer surface temperature of steel tube is measured. In this case as well, during when the outer surface temperature of steel tube reaches the temperature of $Ac_3$ transformation point in the process of high-frequency induction heating and the outer surface temperature of steel tube becomes within the range defined by Formula (1), that is, during the time x, the inner surface temperature of steel tube also reaches the temperature of $Ac_3$ transformation point. Therefore, the micro-structure of heated steel tube can be completely austenitic, and the micro-structure of steel tube obtained by the subsequent rapid cooling can be fully martensitic. For this reason, the lower end of time t required from the measurement of the outer surface temperature of steel tube to the start of rapid cooling can be zero theoretically. However, on the actual production equipment (production line), some space usually exists between the heating device and the cooling device. Also, in carrying out the present invention, a space at least for installing the radiation thermometer must be provided between the heating device and the cooling device. Therefore, in actual operation, the lower end takes a finite value more than zero.

Thus, in the method for producing a steel tube of the present invention, when the high-frequency induction heating ends, the outer surface temperature T1 (°C) of steel tube is measured, and is also controlled so as to be within the range defined by Formula (1). Further, in the method for producing a steel tube of the present invention, by using the measured outer surface temperature of steel tube and Formula (2), the time period for which the steel tube stays at a temperature not less than the $Ac_3$ transformation point is controlled. Thereby, when quenching is performed, the temperature of steel tube and the time period for which the steel tube is held at a high temperature can be made proper. As a result, the micro-structure of the obtained steel tube becomes fully martensitic, and also the crystal grains become fine. Therefore, a steel tube having high strength and toughness can be obtained.

As described above, it is preferable that the time period for which the steel tube stays at a temperature not less than the $Ac_3$ transformation point be shorter. Therefore, it is preferable that the time required from when the outer surface temperature of steel tube reaches the temperature of $Ac_3$ transformation point in the process of high-frequency induction heating to when the outer surface temperature of steel tube becomes within the range defined by Formula (1), that is, the time x be shorter. In order to shorten the time x (second), it is important to increase the heating rate in the high-frequency induction heating. In the method for producing a steel tube of the present invention, therefore, the heating rate is preferably 100 to 500°C/s.

As a method for rapidly cooling the heated steel tube, for example, a method in which the steel tube is dipped in a water tank to be cooled or a method in which cooling water discharged from discharge holes is applied to the steel tube to cool the steel tube is available.

FIG. 2 is a schematic view showing an embodiment in which when the steel tube is quenched by the method for producing the steel tube of the present invention, adopted is a system using a coil shorter in length than the steel tube to be heated and a cooling device provided with a plurality of cooling water injection nozzles. FIG. 2 shows a steel tube 10, which is a material to be treated, rollers 20 of a conveyance system for conveying the steel tube 10 along a longitudinal direction thereof, a coil 30 of a high-frequency induction heating device, a cooling device 40, and an entrance-side thermometer 50 and an exit-side thermometer 60 for measuring the outer surface temperature of the steel tube 10.

The coil 30 of the high-frequency induction heating device is connected to an AC power supply device (not shown) capable of regulating the output (W). In the state in which an AC current is applied to the coil 30, the steel tube 10 is conveyed to the direction indicated by the hatched arrow in FIG. 2 and is subjected to pass through into the coil 30, whereby the portion of the steel tube 10, which is positioned in the coil 30, is subjected to high-frequency induction heating. Also, the cooling device 40, which is provided with a plurality of nozzles (not shown) for injecting cooling water, rapidly cools the steel tube 10 by spraying cooling water onto the outer surface of steel tube through the nozzles.

The entrance-side thermometer 50, which is arranged on the entrance side of the coil 30, can measure the outer surface temperature of steel tube at the entrance of the coil 30, that is, the outer surface temperature of steel tube at the time when the high-frequency induction heating is started. Also, the exit-side thermometer 60, which is arranged on the exit side of the coil 30, can measure the outer surface temperature of steel tube at the exit of the coil 30, that is, the outer surface temperature of steel tube at the end of the high-frequency induction heating. For either of the entrance-side thermometer 50 and the exit-side thermometer 60, a radiation thermometer can be used.

Even if the steel tube is heated by the identical high-frequency induction heating device, the heating rate of steel tube varies depending on the output of AC power source device, the conveying speed of steel tube, and the outside diameter and wall thickness of steel tube to be heated. In other words, in the case where the steel tube is heated by the identical high-frequency induction heating device, if the output of AC power source device, the conveying speed of steel tube, and the outside diameter and wall thickness of steel tube being heated are determined, the heating rate of steel tube can be definitely determined based on operating experiences.

Therefore, in the method for producing a steel tube of the present invention, based on operating experiences, the output of AC power source device and/or the conveying speed of steel tube are regulated according to the outside diameter and wall thickness of steel tube to be heated, whereby the heating rate of steel tube is adjusted, and the outer surface temperature T1 (°C) (the temperature measured by the exit-side thermometer 60) of steel tube at the end of the high-frequency induction heating has only to be controlled so as to be within the range defined by Formula (1).

In the method for producing a steel tube of the present invention, by using the outer surface temperature T1 (°C) of steel tube measured at the end of the heating, time x (second) elapsed from when the outer surface temperature of steel tube reaches the temperature of $Ac_3$ transformation point in the process of high-frequency induction heating is calculated. The time x (second) elapsed from when the outer surface temperature of steel tube reaches the temperature of $Ac_3$ transformation point can be calculated, for example, by Formula (3) below.

$$x = (T1 - TAc3) / v \qquad ... (3)$$

where TAc3 is the temperature (°C) of $Ac_3$ transformation point, and v is heating rate (°C/s).

Since it can be presumed that the heating rate during the high-frequency induction heating is constant, the heating rate v (°C/s) can be derived by dividing the difference between the outer surface temperature (°C) of steel tube measured by the exit-side thermometer 60 and the outer surface temperature (°C) of steel tube measured by the entrance-side thermometer 50 by the heating time (s). Meanwhile, as described before, in the case where the steel tube is heated by the identical high-frequency induction heating device, if the output of AC power source device and the like are made the same conditions, the heating rate of steel tube can be determined based on the operating experiences. Therefore, the heating rate v (°C/s) of the steel tube may be determined based on the operating experiences.

Based on the time x (second) elapsed from when the outer surface temperature of steel tube reaches the temperature of $Ac_3$ transformation point, which can be calculated as described above, time t (second) required from the measurement of the outer surface temperature of steel tube to the start of rapid cooling is controlled so that the time t (second) is within the range defined by Formula (2).

By changing the conveying speed of steel tube, the time t required from the measurement of the outer surface temperature of steel tube to the start of rapid cooling can be controlled. In this case, however, if the conveying speed of steel tube is changed, attention must be paid to the fact that the heating rate v (°C/s) varies as described above. In the method for producing a steel tube of the present invention, therefore, by changing the conveying speed of steel tube and the output of AC power source device that the high-frequency induction heating device has, the time t required from the measurement of the outer surface temperature of steel tube to the start of rapid cooling is controlled so that the time t is within the range defined by Formula (2) while the outer surface temperature of steel tube at the end of the heating is within the range defined by Formula (1).

As described above, in order to shorten the time x (second) elapsed from when the outer surface temperature of steel tube reaches the temperature of $Ac_3$ transformation point, it is important to increase the heating rate in the high-frequency induction heating. Accordingly, in the embodiment shown in FIG. 2, a plurality of coils (high-frequency induction heating device) can be arranged, the heating rate of a first-stage coils is set, for example, at 100°C/s, and the heating rate of a second-stage coils is set at 500°C/s. Thus, the configuration may be made such that a plurality of coils are arranged, and the heating rate of the second-stage coils is made higher than the heating rate of the first-stage coils. Thereby, the time x elapsed from when the outer surface temperature of steel tube reaches the temperature of $Ac_3$ transformation point can be shortened.

In the method for producing a steel tube of the present invention, it is preferable that a blank tube obtained by hot rolling be subjected to cold working into a steel tube having a predetermined size, the steel tube be subjected to the quenching treatment, and thereafter the steel tube be tempered at a temperature not more than the $Ac_1$ transformation point. As described before, by the quenching and tempering treatment performed after cold working, the required toughness can be attained.

As explained above, in the method for producing a steel tube of the present invention, the outer surface temperature T1 (°C) of steel tube is measured when the high-frequency induction heating ends, and also the outer surface temperature T1 of steel tube at the end of the heating is controlled so as to be within the range defined by Formula (1). Further, in the method for producing a steel tube of the present invention, by using the measured outer surface temperature T1 of steel tube and Formula (2), the time period for which the steel tube stays at a temperature not less than the $Ac_3$ transformation point is controlled. Thereby, the micro-structure of the obtained steel tube becomes fully martensitic, and also the crystal grains become fine. Therefore, the obtained steel tube has high strength and toughness, and therefore is suitable as a steel tube for air bag that is used for an accumulator in an automotive air bag system.

In the method for producing a steel tube of the present invention, the steel tube can be made of a steel tube having a chemical composition consisting, in mass%, of C: 0.05 to 0.25%, Mn: 0.05 to 2.50%, Si: 0.1 to 1.0%, Cu: 0.01 to 0.80%, Ni: 0.01 to 0.80%, Cr: 0.01 to 1.20%, and Mo: 0.01 to 1.00%, the balance being Fe and impurities. The steel tube having the above-described chemical composition preferably contains one or more elements from a group consisting of B: 0.05% or less, Ti: 0.10% or less, and Nb: 0.10% or less.

The "impurities" in the balance of the steel tube having the above-described chemical composition are elements that are mixedly included on account of various factors in the production process including raw materials such as ore or scrap when an alloy is produced on an industrial scale. For example, S, P and A1 correspond to the impurities.

Since the steel tube having the above-described chemical composition is used, the strength and toughness can be ensured, and also the hardenability is improved. Therefore, for the steel tube obtained by applying the production method of the present invention, sufficient strength and toughness can be attained. For this reason, this steel tube can achieve the properties required as a steel tube for air bag.

EXAMPLES

To verify the effects achieved by the method for producing a steel tube of the present invention, tests were conducted in which each test specimen (a solid round bar having an outside diameter of 3 mm and a length of 6 mm) was heat-treated.

[Testing method]

In the heat treatment for these tests, quenching treatment in which the test specimen was subjected to high-frequency induction heating and thereafter was rapidly cooled and tempering treatment in which the test specimen was tempered at a temperature not more than the $Ac_1$ transformation point were performed. As a material to be heat-treated, the test specimen of solid round bar was used, and the material grade thereof was carbon steel or low-alloy steel.

The chemical composition of a test specimen made of carbon steel consisted, in mass%, of C: 0.16%, Mn: 0.50%, Si: 0.40%, Cu: 0.25%, Ni: 0.26%, Cr: 0.30%, Mo: 0.01%, B: 0.001%, Ti: 0.03%, and Nb: 0.02%, the balance being Fe and impurities. The temperature of $Ac_3$ transformation point of this carbon steel was 832°C. Also, the chemical composition of a test specimen made of low-alloy steel consisted, in mass%, of C: 0.14%, Mn: 1.34%, Si: 0.29%, Cu: 0.16%, Ni: 0.16%, Cr: 0.62%, Mo: 0.02%, B: 0.001%, Ti: 0.03%, and Nb: 0.02%, the balance being Fe and impurities. The temperature of $Ac_3$ transformation point of this low-alloy steel was 845°C.

In quenching treatment, the outer surface temperature (°C) of the test specimen at the beginning of high-frequency induction heating and at the end of the high-frequency induction heating were measured by using radiation thermometers. Since it can be presumed that the heating rate during the high-frequency induction heating is constant, a heating rate v (°C/s) was derived by dividing the difference between the outer surface temperatures (°C) of test specimen measured at the end of the heating and at the beginning thereof by the heating time (s). By using this heating rate v (°C/s) and the outer surface temperature T1 (°C) of test specimen at the end of the high-frequency induction heating, time x (second) elapsed from when the outer surface temperature of test specimen reached the temperature of $Ac_3$ transformation point in the process of high-frequency induction heating to when the outer surface temperature of test specimen was measured at the end of the high-frequency induction heating was calculated by using Formula (3).

In these tests, the time t required from the measurement of the outer surface temperature of test specimen to the start of rapid cooling was changed, and accordingly, the time (x + t, unit: second) required from when the outer surface temperature of test specimen reached the temperature of $Ac_3$ transformation point to the start of rapid cooling was changed. Also, the output of AC power source of the high-frequency induction heating device was changed, and resultantly, the outer surface temperature (°C) of test specimen after the high-frequency induction heating ended varied in the range of 830 to 1150°C.

[Evaluation procedure]

As evaluation procedures, the hardness and austenite grain size No. of the heat-treated test specimen were measured. For the hardness, the value of HV10 was measured with a testing force of 98.07 N according to the method specified in JIS Z 2244. For the austenite grain size No., by the Bechet-Beaujard method described in JIS G 0551, the above-described heat-treated test specimen was etched in a picric acid saturated aqueous solution, and thereby the austenite crystal grains were caused to reveal, whereby the austenite grain size No. was evaluated.

For the test specimen made of carbon steel, acceptance criteria of test specimens were to satisfy hardness of 380 HV or more and austenite grain size No. of 9 or more. The hardness of 380 HV adopted as the acceptance criteria represents the case where 95 mass% or more of the micro-structure of steel material containing 0.16 mass% of C is martensitic. That is, in the case where the hardness is as high as the acceptance criteria or more, it is considered that the micro-structure of test specimen has been fully martensitic.

For the test specimen made of low-alloy steel, acceptance criteria of test specimens were to satisfy hardness of 370 HV or more and austenite grain size No. of 9 or more. The hardness of 370 HV adopted as the criteria for judging represents the case where 95 mass% or more of the micro-structure of steel material containing 0.14 mass% of C is martensitic. That is, in the case where the hardness is as high as the acceptance criteria or more, it is considered that the micro-structure of test specimen has been fully martensitic.

[Test results]

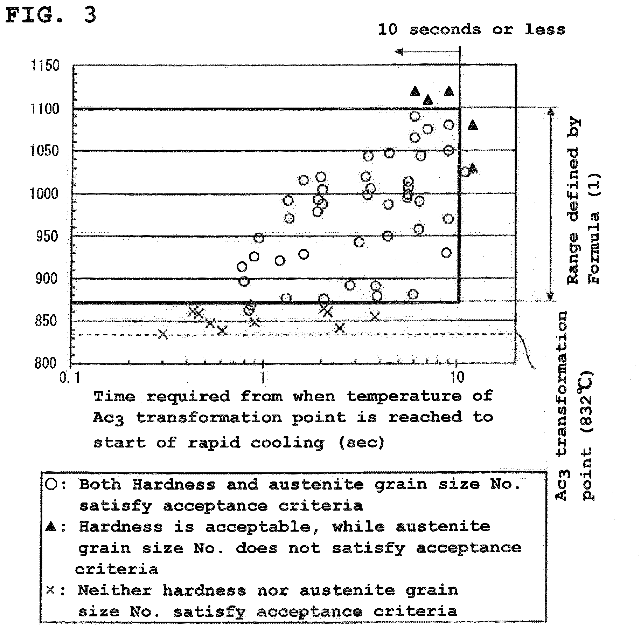

FIG. 3 is a diagram showing the results of tests using test specimens made of carbon steel.

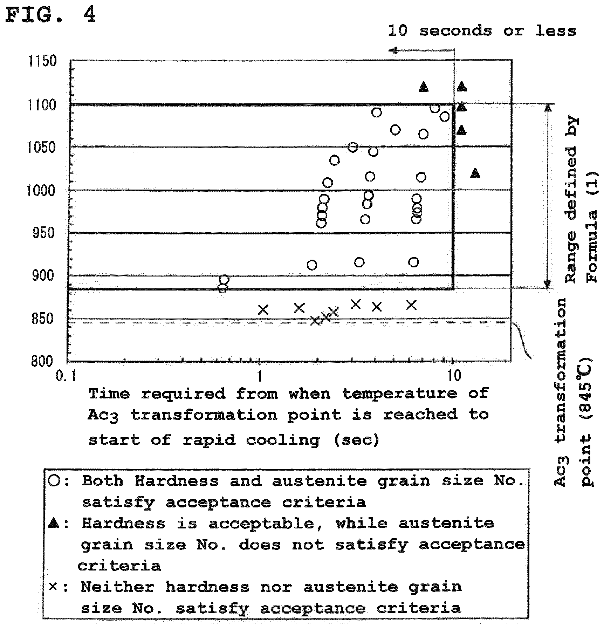

FIG. 4 is a diagram showing the results of tests using test specimens made of low-alloy steel.

In FIGS. 3 and 4, the abscissa represents, on a logarithmic scale, time (x + t, unit: second) required from when the outer surface temperature of test specimen reached the temperature of $Ac_3$ transformation point at the time of quenching to the start of rapid cooling, and the ordinate represents the outer surface temperature T1 (°C) of test specimen at the end of the heating. The heat-treated test specimen in which both of the hardness and the austenite grain size No. satisfy the acceptance criteria is indicated by an outlined circle mark, the heat-treated test specimen in which the hardness was satisfactory, while the austenite grain size No. was less than the acceptance criteria, is indicated by a solid triangle mark, and the heat-treated test specimen in which neither the hardness nor the austenite grain size No. satisfied the acceptance criteria is indicated by a x mark.

In the case where the outer surface temperature T1 of test specimen at the end of the heating became less than the temperature of $Ac_3$ transformation point plus 40°C and deviated from the range defined by Formula (1), as shown in FIGS. 3 and 4, in most of the test specimens, neither the hardness nor the austenite grain size No. satisfied the acceptance criteria. On the other hand, in the case where the outer surface temperature T1 of test specimen at the end of the heating became more than 1100°C and deviated from the range defined by Formula (1), in all of the test specimens, the austenite grain size No. was less than the criteria, and in some of the test specimens, the hardness was also less than the criteria.

Even in the case where the outer surface temperature T1 of test specimen at the end of the heating was within the range defined by Formula (1), when the time required from when the outer surface temperature of test specimen reached the temperature of $Ac_3$ transformation point to the start of rapid cooling was more than 10 seconds, in some of the test specimens, the austenite grain size No. was less than the criteria.

On the other hand, in the case where heat treatment was performed under the conditions that the outer surface temperature T1 of test specimen at the end of the heating was within the range defined by Formula (1), and the time (x + t) required from when the outer surface temperature of test specimen reached the temperature of $Ac_3$ transformation point to the start of rapid cooling was 10 seconds or less, both of the hardness and the austenite grain size No. satisfied the acceptance criteria. That is, it was revealed that by subjecting the steel tube to high-frequency induction heating under the condition that the outer surface temperature T1 (°C) of steel tube measured at the end of the heating is within the range defined by Formula (1), and by controlling the time t (second) required from the measurement of the outer surface temperature of steel tube to the start of rapid cooling so as to be within the range defined by Formula (2), the hardness and austenite grain size No. can satisfy the acceptance criteria.

From this fact, it was revealed that by the method for producing a steel tube of the present invention, the micro-structure of the obtained steel tube can be fully martensitic, and the crystal grains can be made fine.

INDUSTRIAL APPLICABILITY

The method for producing a steel tube of the present invention has remarkable effects described below.

(1) By using the outer surface temperature of steel tube measured at the end of the high-frequency induction heating, the temperature of steel tube and the time period for which the steel tube stays at a temperature not less than the $Ac_3$ transformation point at the time of quenching are controlled so as to be within the predetermined range.
(2) By the above item (1), the micro-structure of the obtained steel tube becomes fully martensitic, and the crystal grains are made fine, so that high strength and toughness required as a steel tube for air bag can be attained.

Since a steel tube having high strength and toughness can be obtained by the method for producing a steel tube of the present invention as described above, the method for producing a steel tube of the present invention is useful for producing a steel tube for air bag used for an accumulator in an automotive air bag system.

REFERENCE SIGNS LIST

10: steel tube (material to be treated), 20: roller, 30: coil for high-frequency induction heating, 40: cooling device, 50: entrance-side thermometer, 60: exit-side thermometer

**Claims**

1.  A method for producing a steel tube for air bag, **characterized in**

    subjecting a steel tube having a wall thickness of 4.0 mm or less to quenching treatment in which the steel tube is rapidly cooled after high-frequency induction heating, the method comprising:

    subjecting the steel tube to the high-frequency induction heating in such a manner that an outer surface temperature T1 (°C) of steel tube measured at the end of high-frequency induction heating is within the range defined by Formula (1);
    by using the outer surface temperature of steel tube thus measured, calculating time x (second) elapsed from when the outer surface temperature of steel tube reaches the temperature of $Ac_3$ transformation point in the process of high-frequency induction heating to when the outer surface temperature of steel tube is measured; and
    based on the calculated time x (second), controlling a period of time t (second) required from the measurement of the outer surface temperature of steel tube to the start of rapid cooling so that the time t (second) is within the range defined by Formula (2); wherein the time x (second) is calculated by Formula (3):

    $$TAc3 + 40°C \leq T1 \leq 1100°C \qquad ... (1)$$

    $$0(sec) < t \leq 10(sec) - x \qquad ... (2)$$

    $$x = (T1 - TAc3) / v \qquad ... (3)$$

    where TAc3 is the temperature (°C) of $Ac_3$ transformation point and v is a heating rate (°C/s) derived by dividing the difference between the outer surface temperatures (°C) of the steel tube measured at the end of the heating and at the beginning thereof by the heating time (s), and

    wherein the steel tube has a chemical composition consisting, by mass%, of C: 0.05 to 0.25%, Mn: 0.05 to 2.50%, Si: 0.1 to 1.0%, Cu: 0.01 to 0.80%, Ni: 0.01 to 0.80%, Cr: 0.01 to 1.20%, Mo: 0.01 to 1.00%, and optionally B: 0.05% or less, Ti: 0.10% or less, and Nb: 0.10% or less, the balance being Fe and impurities.

2.  The method for producing a steel tube for air bag according to claim 1, **characterized in that** a blank tube obtained by hot rolling is subjected to cold working into a steel tube having a predetermined size, the steel tube is subjected to the quenching treatment, and thereafter the steel tube is tempered at a temperature not more than the $Ac_1$ transformation point.

**Patentansprüche**

1. Verfahren zum Herstellen eines Stahlrohrs für einen Airbag, **dadurch gekennzeichnet, dass** ein Stahlrohr mit einer Wandstärke von 4,0 mm oder weniger einer Abschreckbehandlung unterzogen wird, bei der das Stahlrohr nach einer Hochfrequenz-Induktionserwärmung rasch abgekühlt wird, wobei das Verfahren umfasst:

das Stahlrohr der Hochfrequenz-Induktionserwärmung derart zu unterziehen, dass eine am Ende der Hochfrequenz-Induktionserwärmung gemessene Außenoberflächentemperatur T1 (°C) des Stahlrohrs innerhalb des durch Formel (1) definierten Bereichs liegt;
indem die so gemessene Außenoberflächentemperatur des Stahlrohrs verwendet wird; eine Zeit x (Sekunden) berechnet wird, die ab dem Punkt, an dem die Außenoberflächentemperatur des Stahlrohrs die Temperatur des $Ac_3$-Umwandlungspunkts im Verlauf der Hochfrequenz-Induktionserwärmung erreicht, bis zu dem Punkt verstreicht, an dem die Außenoberflächentemperatur des Stahlrohrs gemessen wird; und
auf Grundlage der berechneten Zeit x (Sekunden), einen Zeitraum t (Sekunden), der ab der Messung der Außenoberflächentemperatur des Stahlrohrs bis zum Beginn des raschen Abkühlens erforderlich ist, so zu steuern, dass die Zeit t (Sekunden) innerhalb des durch Formel (2) definierten Bereichs liegt; wobei die Zeit x (Sekunden) durch Formel (3) berechnet wird:

$$TAc3 + 40°C \leq T1 \leq 1100°C \qquad \ldots (1)$$

$$0(Sek.) < t \leq 10(Sek.) - x \qquad \ldots (2)$$

$$x = (T1 - Tac3) / v \qquad \ldots (3)$$

worin TAc3 die Temperatur (°C) des $Ac_3$-Umwandlungspunkts ist und v eine Erwärmungsrate (°C/s) ist, die abgeleitet wird, indem die Differenz der Außenoberflächentemperaturen (°C) des Stahlrohrs, die am Ende des Erwärmens und bei dessen Beginn gemessen werden, durch die Erwärmungszeit (s) dividiert wird, und
wobei das Stahlrohr eine chemische Zusammensetzung hat, die in Masse-% aus C: 0,05 bis 0,25 %, Mn: 0,05 bis 2,50 %, Si: 0,1 bis 1,0%, Cu: 0,01 bis 0,80 %, Ni: 0,01 bis 0,80 %, Cr: 0,01 bis 1,20 %, Mo: 0,01 bis 1,00 % und optional B: 0,05 % oder weniger, Ti: 0,10 % oder weniger und Nb: 0,10 % oder weniger besteht, wobei es sich bei dem Rest um Fe und Verunreinigungen handelt.

2. Verfahren zum Herstellen eines Stahlrohrs für einen Airbag nach Anspruch 1, **dadurch gekennzeichnet, dass** ein durch Warmwalzen erhaltener Rohrrohling einer Kaltbearbeitung zu einem Stahlrohr mit einer vorbestimmten Größe unterzogen wird, das Stahlrohr der Abschreckbehandlung unterzogen wird, und das Stahlrohr danach bei einer Temperatur getempert wird, die nicht über dem $Ac_1$-Umwandlungspunkt liegt.

**Revendications**

1. Procédé de fabrication d'un tube en acier pour coussin de sécurité gonflable, **caractérisé par** la soumission d'un tube en acier ayant une épaisseur de paroi de 4,0 mm ou moins à un traitement de trempe dans lequel le tube en acier est refroidi rapidement après chauffage par induction à haute fréquence, le procédé comprenant :

la soumission du tube en acier au chauffage par induction à haute fréquence de telle manière qu'une température de surface extérieure T1 (°C) du tube en acier mesurée à la fin du chauffage par induction à haute fréquence se situe dans la plage définie par la formule (1) ;
en utilisant la température de surface externe du tube en acier ainsi mesurée, le calcul du temps x (en secondes) s'étant écoulé du moment où la température de surface externe du tube en acier atteint la température du point de transformation $Ac_3$ dans le processus de chauffage par induction à haute fréquence au moment où la température de surface externe du tube en acier est mesurée ; et
sur la base du temps x calculé (en secondes), le contrôle d'une période de temps t (en secondes) requise de la mesure de la température de surface externe du tube en acier au démarrage du refroidissement rapide de sorte que le temps t (en secondes) se situe dans la plage définie par la formule (2) ; dans laquelle le temps x (en secondes) est calculé par la formule (3) :

$$TAc3 + 40\ °C \leq T1 \leq 1100\ °C \qquad ...(1)$$

$$0(s) < t \leq 10(s) - x \qquad ...(2)$$

$$X = (T1 - TAc3)/v \qquad ...(3)$$

où TAc3 est la température (°C) du point de transformation $Ac_3$ et v est la vitesse de chauffage (°C/s) dérivée en divisant la différence entre les températures de surface externe (°C) du tube en acier mesurées à la fin du chauffage et au début de celui-ci par le temps de chauffage (s), et

dans lequel le tube en acier a une composition chimique constituée, en % en masse, de C : 0,05 à 0,25 %, Mn : 0,05 à 2,50 %, Si : 0,1 à 1,0 %, Cu : 0,01 à 0,80 %, Ni : 0,01 à 0,80 %, Cr : 0,01 à 1,20 %, Mo : 0,01 à 1,00 %, et éventuellement, B : 0,05 % ou moins ; Ti : 0,10 % ou moins, et Nb : 0,10 % ou moins, le reste étant du Fe et des impuretés.

2. Procédé de production d'un tube en acier pour coussin de sécurité gonflable selon la revendication 1, **caractérisé en ce qu'**une ébauche de tube obtenue par laminage à chaud est soumise à un usinage à froid la transformant en un tube en acier ayant une taille prédéterminée, le tube en acier est soumis au traitement de trempe, et le tube en acier est ensuite soumis à un revenu à une température ne dépassant pas le point de transformation $Ac_1$.

## FIG. 1

## FIG. 2

# FIG. 3

# FIG. 4

10 seconds or less

Time required from when temperature of
Ac₃ transformation point is reached to
start of rapid cooling (sec)

Range defined by Formula (1)

Ac₃ transformation point (845°C)

○: Both Hardness and austenite grain size No.
   satisfy acceptance criteria
▲: Hardness is acceptable, while austenite
   grain size No. does not satisfy acceptance
   criteria
×: Neither hardness nor austenite grain
   size No. satisfy acceptance criteria

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006046503 A
- JP 2002194501 A
- WO 2004104255 A
- JP 2010132999 A